# NEUE EUROPÄISCHE PATENTSCHRIFT

(11) **EP 1 692 343 B2**
(45) Veröffentlichungstag und Bekanntmachung des Hinweises auf die Entscheidung über den Einspruch: **19.01.2011**
(45) Hinweis auf die Patenterteilung: 16.01.2008
(21) Anmeldenummer: 04765901.6
(22) Anmeldetag: 08.10.2004
(51) Int. Cl.: D21G 1/02, D21G 1/00, F16C 13/00

(54) **SCHWINGUNGSGEDÄMPFTE WALZE**
OSCILLATION-DAMPED ROLL
CYLINDRE A VIBRATIONS AMORTIES

(30) Priorität: 12.12.2003 DE 10358292
(43) Veröffentlichungstag der Anmeldung: 23.08.2006
(73) Patentinhaber: SHW Casting Technologies GmbH, 73433 Aalen-Wasseralfingen (DE); MFS Maschinenfabrik GmbH, 66131 Saarbrücken-Ensheim (DE)
(72) Erfinder: WIPPRECHT, Mario, 89551 Köngisbronn (DE); ADAMS, Heinz, 66740 Saarlouis (DE); FREIS, Franz, 66131 Ensheim (DE)
(74) Vertreter: Wess, Wolfgang
(86) Internationale Anmeldenummer: PCT/EP2004/011298
(87) Internationale Veröffentlichungsnummer: WO 2005/061789

(56) Entgegenhaltungen:
- WO-A-01/32410
- DE-A- 2 154 295
- DE-A- 3 207 654
- DE-A- 10 046 868
- DE-U- 9 301 059
- FI-B- 104 648
- US-A- 4 471 515
- US-A- 5 365 842

## Beschreibung

Die Erfindung betrifft eine Walze für ein bahnförmiges Medium, vorzugsweise für die mechanische, thermische oder thermomechanische Behandlung eines bahnförmigen Mediums, mit wenigstens einem Hohlraum.

Eine derartige Walze ist aus der DE-U-93 01 059 bekannt.

Die Behandlung kann insbesondere ein Pressen, Trocknen oder Glätten des Mediums oder eine Kombination dieser Bearbeitungsarten sein. Das Medium ist vorzugsweise eine Papierbahn.

Solche Walzen werden beispielsweise in Kalandern eingesetzt, mit denen Papierbahnen geglättet werden. Kalander weisen mehrere Walzen auf, die in einem Rahmen, der auf einem Fundament abgestützt ist, drehbar und gegeneinander beweglich gelagert sind. Die zu behandelnde Papierbahn wird zwischen den Walzen hindurchgeführt, wobei die Walzen Druck auf die Papierbahn ausüben. Der Glättvorgang wird als ein Aufprägen der glatten Walzenoberfläche unter hohem Druck auf die zunächst rauhe Papierbahnoberfläche verstanden. Eine erhöhte Temperatur der Walzenoberfläche ist vorteilhaft, wofür solche Walzen in vielen Anwendungen beheizt werden.

Unvermeidbare Unvollkommenheiten aus der Herstellung der Walzen, beispielsweise Fertigungstoleranzen in verschiedenen Stadien der Fertigung, führen zu Unwuchten und Verformungen der Walzen im Betrieb. Dies macht sich in Form von Schwingungen und Vibrationen bemerkbar, die geeignet sind, den Betrieb erheblich zu beeinträchtigen. Die Walzen werden darum nach der Fertigstellung ausgewuchtet, d. h. die Unwuchten werden gemessen und durch geeignete Maßnahmen kompensiert. Um thermische Verformungen zu berücksichtigen, wird das Auswuchten auch bei erhöhter Walzentemperatur durchgeführt.

Auch für das Auswuchten gelten Toleranzen, jenseits derer der Aufwand für eine weitere Verbesserung nicht mehr wirtschaftlich ist. Ferner sind die Verformungen von Belastungen im tatsächlichen Betrieb abhängig, die in einer Wuchtmaschine nicht vollständig nachgebildet werden können. Auch werden Walzen bei unterschiedlichen Drehzahlen und Temperaturen betrieben. Das Auswuchten kann selbst aber nur für einen bestimmten Betriebszustand optimiert werden. Daher verbleiben für die davon abweichenden Betriebszustände Rest-Unwuchten, die zu Schwingungen und Vibrationen im Betrieb führen.

Kalanderwalzen werden daher so ausgelegt, dass sie in einem ausreichenden Abstand von ihren kritischen Eigenfrequenzen betrieben werden. In der Nähe der kritischen Eigenfrequenzen verstärken sich die Schwingungen und Vibrationen der Walze durch Resonanz, an der das gesamte System des Kalanders beteiligt ist, bis zu Schwingungszuständen, die einen Kalanderbetrieb nicht mehr zulassen. Dies kann durch Markierungen auf der Papierbahn hervorgerufen sein, die aus umlauffrequenten Schwankungen des Liniendrucks herrühren, und bis zu einer Gefährdung von Bauteilen des Kalanders durch Ermüdung reichen.

Es ist eine Aufgabe der Erfindung, das Schwingungsverhalten von Walzen für bahnförmige Medien, insbesondere von Walzen für die Behandlung bahnförmiger Medien zu verbessern.

Für Werkzeugmaschinen ist es aus der DE 100 46 868 C2 bekannt, das Maschinenbett einer Werkzeugmaschine mit einer Mischung breiiger Konsistenz aus einer Flüssigkeit und körnigen Feststoffen zu befüllen. Schwingungen beim Betrieb, die in das Maschinenbett gelangen, können dadurch wirkungsvoll gedämpft werden. Das Maschinenbett überträgt die - Schwingungen auf die Flüssigkeit, die ihrerseits die Feststoffkörner bewegen möchte. Die Feststoffkörner beharren jedoch aufgrund ihrer Massenträgheit an ihrem Ort, und es kommt zu einer Relativbewegung zwischen der Flüssigkeit und den Körnern. Durch die Flüssigkeitsreibung an den Körnern und Verwirbelungen in der Flüssigkeit selbst wird Energie dissipiert, wodurch die Schwingungen des Maschinenbetts und damit der gesamten Maschine gedämpft werden.

Analog hierzu kann auch ein Walzengestell, beispielsweise ein Kalanderrahmen, das als Hohlkonstruktion, beispielsweise als hohle Schweißkonstruktion, ausgeführt ist, durch Befüllen der Hohlräume des Gestells mit einer großen Dämpfung ausgestattet werden.

Die Erfindung geht jedoch einen entscheidenden Schritt weiter, indem bei einer Bahnbehandlungswalze ein in der Walze gebildeter Hohlraum ganz oder teilweise mit einer Energie dissipierenden Mischung gefüllt ist. Die Bahnbearbeitungswalze kann insbesondere eine Kalanderwalze sein. Die Walze kann nicht nur in Papiermaschinen, sondern beispielsweise auch in Rotationsdruckmaschinen oder in der Bearbeitung von Metall- oder Kunststofffolien oder -bändern Verwendung finden.

Die Mischung besteht aus einer Flüssigkeit und wenigstens einem in der Flüssigkeit nicht löslichen Mischungspartner, der durch Feststoffpartikel, nämlich einen körnigen Feststoff, gebildet ist. Die Mischung kann mehrere unterschiedliche Flüssigkeiten umfassen. Die Mischung kann auch mehrere unterschiedliche Sorten von körnigem Feststoff enthalten, wobei sich die Partikel der einzelnen Feststoffe der Größe, der Gestalt und/oder des spezifischen Gewichts nach unterscheiden können. In der in solchen Fällen als Dispersion gebildeten Mischung sollten die Feststoffpartikel jedoch gleichmäßig und fein verteilt sein, so dass in dem Hohlraum im Ganzen gesehen die Mischung in einer gleichmäßigen Massenverteilung vorliegt. Der Feststoff kann insbesondere eine Konsistenz wie Sand aufweisen.

Bevorzugte Dispersionen werden in der DE 100 46 868 C2 offenbart, die diesbezüglich in Bezug genommen wird.

Der Feststoff bevorzugter Dispersionen weist eine Form auf, vorzugsweise mit Kanten, durch die im Falle einer Relativbewegung des Feststoffs in der Flüssigkeit möglichst hohe Reibungskräfte erzeugt werden. Falls Sand den Feststoff bildet, handelt es sich vorzugsweise um gemahlenen Sand.

Die Mischung ist im gesamten Betriebstemperaturbereich der Walze von einer breiigen Konsistenz.

Der wenigstens eine Hohlraum ist in bevorzugten ersten Ausführungen ein zentraler Hohlraum, so dass sich die Rotationsachse der Walze durch die Mischung erstreckt. Vorzugsweise ist der Hohlraum zu der Rotationsachse konzentrisch. Walzen für die mechanische oder thermomechanische Behandlung von bahnförmigen Medien, wie insbesondere Kalanderwalzen sie darstellen, sind überwiegend mit einem zentralen Hohlraum ausgestattet. Die Ausbildung des Hohlraums kann bauartbedingt sein, wie beispielsweise bei sogenannten Verdrängerwalzen mit einem als Ringspalt gebildeten Temperierkanal, oder zwecks Verringerung von Betriebsspannungen vorgesehen sein, wie beispielsweise bei Walzen mit als periphere Bohrungen gebildeten Temperierkanälen zur Durchleitung eines Heiz- oder Kühlfluids. Der Walzenmantel kann selbst unmittelbar eine Behälterwandung für die Mischung bilden. Die Mischung kann auch in einem eigens für die Mischung vorgesehenem Behälter aufgenommen und dieser Behälter im Inneren der Walze angeordnet sein. Es können im Walzeninneren auch mehrere derartige, separate Mischungsbehälter angeordnet sein, beispielsweise entlang der Rotationsachse nebeneinander und voneinander beabstandet. Der oder die mehreren Mischungsbehälter kann oder können im Walzeninneren steif oder elastisch abgestützt sein.

Der wenigstens eine Hohlraum ist in bevorzugten zweiten Ausführungen ein Ringspalt, der zwischen dem Walzenmantel und einem von dem Walzenmantel umgebenen Zylinderkörper verbleibt. Der Ringspalt kann vollständig oder teilweise mit der Mischung gefüllt sein, wobei der Walzenmantel eine äußere und der Zylinderkörper eine innere Behälterwand für die Mischung bilden. Der Hohlraum kann ferner auch nur innerhalb des Zylinderkörpers gebildet sein. Ebenso kann der Zylinderkörper einen zentralen ersten Hohlraum umgeben, und ein zweiter Hohlraum in dem Ringspalt gebildet sein. Die beiden Hohlräume können je mit der gleichen Mischung oder gegebenenfalls auch mit unterschiedlichen Mischungen, die jedoch je für sich eine Mischung der beschriebenen Art sind, ganz oder teilweise gefüllt sein. Wie bereits im Falle des wenigstens einen zentralen Hohlraums muss auch in diesen Ausführungen der Walzenmantel oder der Zylinderkörper nicht unmittelbar eine Behälterwand für die Mischung bilden, obgleich dies bevorzugt wird.

Der wenigstens eine Hohlraum ist zwar bevorzugt ein Hohlraum, der konzentrisch zu der Rotationsachse der Walze ist. Unumgänglich erforderlich ist dies jedoch nicht. Alternativ können auch mehrere je nicht konzentrische Hohlräume vorgesehen sein, die jedoch in ihrer Gesamtheit rotationssymmetrisch um die Rotationsachse angeordnet sein sollten, um nicht ihrerseits Unwuchten erst hervorzurufen.

Ein Befüllen des Hohlraums oder der mehreren Hohlräume hat keine Wirkung auf das Wuchtverhalten der Walze. Weder verringert es die Walzenunwucht, noch vermag es beispielsweise eine temperaturbedingte Verbiegung der Walze, die ihrerseits wieder zu einer Unwucht führt, zu beeinflussen, Im Gegenteil würde eine Befüllung der Walzenbohrung bei einer Auslenkung der Masse der Walze die fliehkraftbedingten Massenkräfte gegenüber einem nichtbefüllten Hohlraum erhöhen. Auch eine dämpfende Wirkung, wie sie die Befüllung eines gegebenenfalls hohlen Walzengestells bewirkt, ist nicht zu erwarten. Einige Zeit nach dem Anlaufen der Walze wird sich die Füllung des Hohlraums mit der selben Frequenz drehen wie die Walze. Es würde auch bei einem umlauffrequenten. Mittenausschlag, der überwiegenden Ursache für die Walzenunwucht bei hohen Drehzahlen, zwischen der Walze und der Mischung zu keiner Relativbewegung kommen, die letztlich eine dämpfende Wirkung entfalten könnte. Dies wurde auch durch praktische Versuche bestätigt. Die Unwucht eines Walzenrohres ändert sich durch die Befüllung des Rohrinneren mit der bevorzugt als breiige Dispersion vorliegenden Mischung nicht.

Bemerkenswert ist dagegen die sogenannte Laufruhe einer mit der Mischung befüllten Walze verglichen mit einer Walze ohne Füllung bei Annäherung oder sogar Überschreitung der kritischen Eigenfrequenz. Musste die Geschwindigkeit der Wuchtmaschine im Falle der nicht befüllten Walze gedrosselt werden, weil sie von den Rollen zu springen drohte, konnte nach einer Befüllung des Walzenhohlraums die kritische Drehzahl problemlos durchfahren werden. Die Walze lief sogar im sogenannten überkritischen Bereich ruhig.

Auch hierfür liefert die Theorie im Nachhinein eine plausible Erklärung: Solange im unterkritischen Bereich die Walze und deren Befüllung ohne Relativbewegung zueinander miteinander rotieren, ist keine zusätzliche Dämpfung möglich. Bei Annäherung an die Eigenfrequenz kommt es jedoch in realen Systemen, die stets eine Elastizität und Dämpfung aufweisen, zu einer Phasenverschiebung. Die von der Unwuchtkraft verursachte Auslenkung bleibt um einen zunehmenden Drehwinkel hinter der Unwuchtkraft zurück, bis sich oberhalb der Eigenfrequenz eine stabile Phasenverschiebung von 180° einstellt. Sobald aber die Unwuchtkraft, bzw. Fliehkraft aufgrund der Unwucht, von der Richtung der Auslenkung abweicht, bilden sich in der Befüllung, d. h. in der Mischung, Strömungen heraus, die dämpfend wirken. Die erfindungsgemäße Befüllung des wenigstens einen Hohlraums eröffnet somit die Möglichkeit, kostengünstige Walzen herzustellen, die nahe der Eigenfrequenz und sogar im überkritischen Bereich betrieben werden können. Aufgrund der Erfindung können die Walzen im Durchmesser kleiner ausgeführt werden. Ferner können in einem Kalander bei unveränderter Kalanderbreite nicht nur die Walzen kleiner, leichter und kostengünstiger ausgeführt, sondern hierdurch der gesamte Kalander auch kleiner dimensioniert werden.

Als zusätzlicher positiver Effekt ist eine erfindungsgemäße Walze darüber hinaus in der Lage, Schwingungen und Vibrationen, die von anderen Komponenten, mit denen die Walze in der Bahnbehandlung zusammenwirkt, beispielsweise eine oder mehrere Gegenwalzen, von Antrieben, Lagern usw. oder auch von dem bahnförmigen Medium selbst herrühren, wirkungsvoll zu dämpfen. So kann z. B. auch im Hinblick auf die Entstehung des bei Kalandern gefürchteten Barring mit einer starken Verbesserung gerechnet werden.

Schließlich weist eine erfindungsgemäße Walze auch im Bereich der sog. halbkritischen Drehzahl eine größere Laufruhe als eine baugleiche Walze ohne Befüllung auf. Zu halbkritischen Resonanzen kommt es dann, wenn eine Anisotropie im Walzenquerschnitt vorliegt. Eine solche Walze hat dann in zwei zueinander senkrechten Ebenen unterschiedliche Steifigkeiten. Dreht sich solch eine Walze in ihren beiden Zapfen gelagert und unter Eigengewicht oder zusätzlicher Linienlast einmal um ihre Achse, so durchläuft der Betrag ihrer Durchbiegung zwei Perioden. Eine solche Walze erfährt bei einer Drehgeschwindigkeit, welche der halben Eigenfrequenz entspricht, zweimal eine Anregung. Sie wird also bei dieser Geschwindigkeit mit einer Frequenz angeregt, welche ihrer Eigenfrequenz entspricht. Bei dieser Anregung wird die Dämpfung durch die Befüllung voll wirksam.

In bevorzugten Ausführungen kann die Mischung mit einem Überdruck beaufschlagt werden, bevorzugt mittels einer durch Druckfluid aufweitbaren oder bereits aufgeweiteten Kammer. Die Kammer ist vorzugsweise innerhalb der Mischung angeordnet, kann grundsätzlich jedoch auch eine Außenwandung eines in diesem Fall insgesamt volumenveränderlichen Hohlraums bilden. Die Wände der Kammer sind bereichsweise oder im Ganzen flexibel. Im letzteren Fall bildet eine Blase die Kammer. Die Kammer kann jedoch auch nur aus starren Kammerwänden gebildet sein, von denen wenigstens eine zu wenigstens einer anderen Behälterwand beweglich und dadurch das eingeschlossene Volumen veränderbar ist. Solch eine Kammer kann insbesondere in der Art einer Kolben-Zylinder-Anordnung gebildet sein, wobei eine den Kolben bildende Kammerwand von der umgebenden Kammerwand vorzugsweise linear geführt wird. Auch eine Kombination aus flexiblen und beweglichen, starren Kammerwänden ist vorteilhaft. Die Kammer kann insbesondere mittels eines elastischen Rückstellmittels, insbesondere eines Balgs, vorzugsweise eines Metallbalgs, gebildet werden. Die genannte, bewegliche Behälterwand kann an einem Kopfende des Balgs befestigt sein oder unmittelbar von dessen Kopfende gebildet werden, während der Balg an seinem Fußende mit einer anderen Behälterwand verbunden ist. Die Druckkraft des eingeschlossenen Fluids und die Elastizitätskraft des Balgs überlagern einander vorteilhafterweise positiv, so dass sich im Falle einer Volumenausdehnung der Mischung das Kammervolumen verkleinert und der Kammerdruck und auch die rückstellende Elastizitätskraft des Balgs sich dadurch erhöhen. Die Kammer kann vorteilhafterweise Volumenänderungen des Hohlraums und/oder der darin befindlichen Mischung kompensieren und somit als Ausgleichskammer wirken. Volumenänderungen finden bereits allein aufgrund von Temperaturänderungen der Walze statt.

Anstatt einer Druckbeaufschlagung mittels einer Kammer oder mehreren Kammern kann die Mischung grundsätzlich auch unmittelbar durch eine Druckfluidbeaufschlagung unter einen Überdruck gesetzt werden. Das Druckfluid kann ein Gas oder Gasgemisch, insbesondere Luft, oder auch eine zusätzliche Flüssigkeit sein. In einer alternativen, ebenfalls bevorzugten Ausführung ist der Hohlraum evakuierbar, d. h. die in ihm enthaltene Mischung ist mit einem Unterdruck beaufschlagbar.

Bevorzugte Merkmale werden auch in den Unteransprüchen und deren Kombinationen beschrieben, wobei die vorstehend beschriebenen Merkmale und die der Unteransprüche einander wechselseitig vorteilhaft ergänzen.

Ausführungsbeispiele der Erfindung werden nachfolgend anhand von Figuren erläutert. An den Ausführungsbeispielen offenbar werdende Merkmale bilden je einzeln und in jeder Merkmalskombination die Gegenstände der Ansprüche und auch die vorstehend beschriebenen Ausgestaltungen vorteilhaft weiter. Es zeigen:
- Figur 1: eine Walze eines ersten Ausführungsbeispiels mit einem Walzenmantel, der mit einer schwingungsdämpfenden Masse gefüllt ist, in der eine Ausgleichskammer angeordnet ist,
- Figur 2: eine Walze eines zweiten Ausführungsbeispiels mit einem mit der Masse gefüllten Walzenmantel und einer in der Masse angeordneten, modifizierten Ausgleichskammer,
- Figur 3: eine Walze eines dritten Ausführungsbeispiels mit wenigstens einem im Walzenmantel angeordneten Dämpfungskörper,
- Figur 4: eine Walze eines vierten Ausführungsbeispiels mit einem doppelwandigen Walzenkörper, dessen Ringspalt mit der schwingungsdämpfenden Masse gefüllt ist,
- Figur 5: eine Walze eines fünften Ausführungsbeispiels mit einem Walzenmantel und einem darin elastisch abgestützten, hohlen Verdrängerkörper,
- Figur 6: eine Walze einer sechsten Ausführungsbeispiels mit einem Walzenmantel und einem darin elastisch abgestützten, massiven Verdrängerkörper,
- Figur 7: eine Walze eines siebten Ausführungsbeispiels mit einem Walzenmantel und einem darin fest abgestützten, mit der Masse gefüllten Verdrängerkörper und
- Figur 8: eine Walze eines achten Ausführungsbeispiels mit einem Walzenmantel und einem darin fest abgestützten, mit der Masse gefüllten Verdrängerkörper, wobei auch ein zwischen dem Walzenmantel und dem Verdrängerkörper verbliebener Ringspalt mit der Masse gefüllt ist.

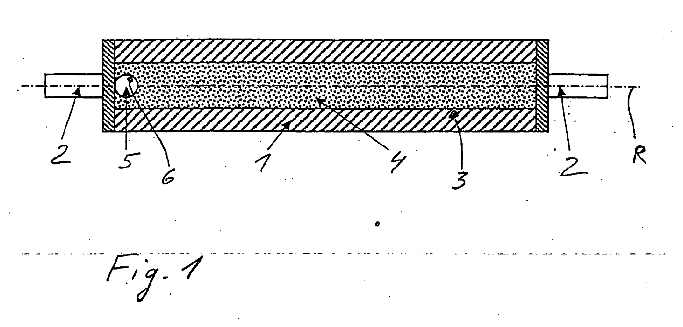

Figur 1 zeigt eine Walze eines ersten Ausführungsbeispiels mit einem kreiszylindrischen Walzenmantel 1, an dessen beiden axialen Enden je ein Zapfen 2 über einen Zapfenflansch befestigt ist. Die so erhaltene Walze ist an ihren beiden Zapfen 2 um eine Rotationsachse R drehbar und antreibbar lagerbar. Insbesondere kann die Walze eine Kalanderwalze für die Glättung einer Papierbahn sein.

In dem zu der Rotationsachse R rotationssymmetrischen Walzenmantel 1 ist ein zentraler Hohlraum 3 gebildet, der zu der Rotationsachse R ebenfalls rotationssymmetrisch ist. Umfangsseitig bildet die Mantelinnenfläche des Walzenmantels 1 die Hohlraumwand. Die beiden Zapfenflansche verschließen den Hohlraum 3 an den beiden axialen Stirnseiten des Walzenmantels 1.

Der Hohlraum ist mit einer Mischung 4 aus einer Flüssigkeit und einer Vielzahl von Feststoffpartikeln gefüllt. Die Feststoffpartikel sind körnig. Insgesamt weist die Mischung 4 eine breiige Konsistenz auf. Die Mischung 4 füllt den Hohlraum 3 mit Ausnahme einer mit einem Gas gefüllten Kammer 5 vollständig aus. Eine flexible Membran 6 bildet die Wandung der Kammer 5. Die Membran 6 ist vorzugsweise elastisch. Die Kammer 5 ist somit als Blase, vorzugsweise elastische Blase gebildet. Die Kammer 5 ist mit Luft gefüllt, wobei der Luftdruck in der Kammer 5 größer als der Druck in der Walzenumgebung ist. Die Kammer 5 und somit die gesamte Mischung 4 stehen daher unter einem Überdruck. Die Kammer 5 wirkt als Ausgleichskammer, indem sie Volumenänderungen, die der Hohlraum 3 und die Mischung 4 relativ zueinander erfahren, ausgleicht.

Der Walzenmantel 1 ist als einfaches Rohr dargestellt. Handelt es sich bei der Walze 1, 2 um eine Walze für eine thermomechanische Bahnbehandlung, so ist der Walzenmantel 1 temperierbar, d. h. beheizbar oder kühlbar. Die Walze 1, 2 kann beispielsweise periphere Temperierkanäle aufweisen, die sich axial durch den Walzenmantel 1 erstrecken und vorzugsweise an beiden axialen Enden münden. Als Verdrängerwalze könnte sie einen die Rotationsachse R umgebenden Ringspalt als Temperierkanal aufweisen, der zwischen dem Walzenmantel 3 und einem darin angeordneten Verdrängerkörper gebildet ist. Der Verdrängerkörper kann den Hohlraum mit der Mischung 4 unmittelbar ummanteln, wie im dargestellten Beispiel der Walzenmantel 1.

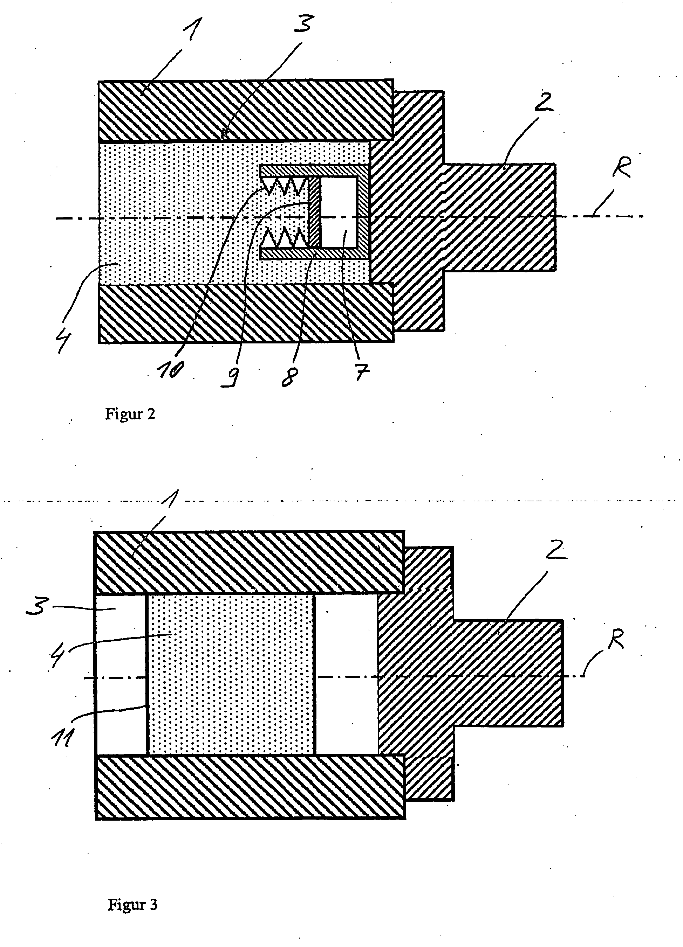

Figur 2 zeigt ein zweites Ausführungsbeispiel einer schwingungsgedämpften Walze 1, 2, die sich von der Walze 1, 2 des ersten Ausführungsbeispiels nur in Bezug auf die Ausgleichskammer unterscheidet. Die Ausgleichskammer 7 des zweiten Ausführungsbeispiels umfasst eine steife Kammerwand 8, eine scheibenförmige Kammerwand 9 und einen elastischen Faltenbalg 10. Der Faltenbalg. 10 ist ein Metallfederbalg. Die Kammerwand 8 umgibt die Kammerwand 9 und bildet für die Kammerwand 9 eine Geradführung entlang der Rotationsachse R. Sie umgibt ferner auch den Faltenbalg 10. Die Kammerwand 8 ist topfförmig mit einem vorzugsweise kreiszylindrischen Boden und einer von dem Boden parallel zu der Rotationsachse R aufragenden, vollständig umlaufenden Seitenwand, die die Kammerwand 9 führt. Die Kammerwand 8 ist an einem der Zapfenflansche befestigt, im Ausführungsbeispiel ist sie mit ihrem Boden auf den Flansch aufgesetzt. Die Ausgleichskammer und die sie bildenden Komponenten 8-10 weisen um die Rotationsachse R vorzugsweise Rotationssymmetrie auf. Der Faltenbalg 10 ist mit seinem Fußende am Topfrand der Kammerwand 8 befestigt und ragt von dort in den von der Kammerwand 8 gebildeten Topf hinein. An dem Kopfende des Balgs 10 ist die Kammerwand 9 befestigt. Die Kammerwand 8 und die Kammerwand 9 bilden zusammen eine Kolben-Zylinder-Anordnung. Den Hauptteil der Kammer 7 bildet der Hohlraum zwischen der Kammerwand 9 und dem entlang der Rotationsachse R gegenüberliegenden Boden der Kammerwand 8. Von dem Boden der Kammerwand 8 aus gesehen hinter der Kammerwand 9 verbleibt zwischen der Kammerwand 8 und dem Faltenbalg 10 eine Nebenkammer. Die Kammer 7 und die Nebenkammer sind vorzugsweise miteinander verbunden, so dass ein Druckausgleich stattfinden kann. Zur Mischung 4 ist die Kammer 7 durch die umlaufend fluiddichte Befestigung des Faltenbalgs 10 an der Kammerwand 8 abgedichtet. Einer Dehnung des Faltenbalgs 10 wirken zum Einen dessen rückstellende Elastizitätskraft und zum Anderen die damit einhergehende Druckerhöhung in der Kammer 7 entgegen, wodurch Volumenänderungen, die der Hohlraum 3 und die Mischung 4 relativ zueinander erfahren können, ausgeglichen werden.

Figur 3 zeigt eine Walze 1, 2 eines dritten Ausführungsbeispiels, in dem der Walzenmantel 1 nicht wie im ersten und im zweiten Ausführungsbeispiel unmittelbar die Behälterwand für die Mischung 4 bildet, sondern in dem zentralen Walzenhohlraum 3 ein Dämpfungskörper angeordnet ist. Den Dämpfungskörper bilden ein Behälter 11 und die Mischung 4, die den Behälter 11 vollständig füllt. Der Behälter 11 ist ein kreiszylindrischer Behälter, der mit seinem Zylindermantel satt am Walzenmantel 1 anliegt und unmittelbar an der Mantelinnenfläche des Mantelinantels 1 starr befestigt ist, vorzugsweise kraftschlüssig. Der kreiszylindrische Behälter 11 weist im Vergleich zu seinem Durchmesser und seiner Länge dünne Wände auf. Der von dem Behälter 11 umschlossene Hohlraum entspricht in seinem Querschnitt daher im Wesentlichen dem Querschnitt des Walzenhohlraums 3. Die in Richtung der Rotationsachse R gemessene axiale Länge des Walzenhohlraums 3 ist allerdings deutlich größer als die axiale Länge des mit der Mischung 4 gefüllten Hohlraums des Dämpfungskörpers 4, 11. Vorzugsweise sind im Walzenhohlraum 3 entlang der Rotationsachse R voneinander beabstandet mehrere der Dämpfungskörper 4, 11 angeordnet und an dem Walzenmantel 1 abgestützt. Durch eine mit dem Dämpfungskörper 4, 11 oder mehreren Dämpfungskörpern 4, 11 realisierbaren axial abschnittsweisen Anordnung der Mischung 4 kann das Schwingungsverhalten von Walzen besonders gezielt, pro Walze individuell beeinflusst werden. Separate Dämpfungskörper 4, 11 eignen sich auch in besonderer Weise für die Nachrüstung von Walzen, für die eine derartige Schwingungsdämpfung ursprünglich nicht vorgesehen war. In einer Modifikation könnte der Mantel des Behälters 11 durch den Walzenmantel 1 ersetzt werden, indem in den Walzenmantel 1 nur die scheibenförmigen Böden des Behälters 4 als Stirnwände eingesetzt werden.

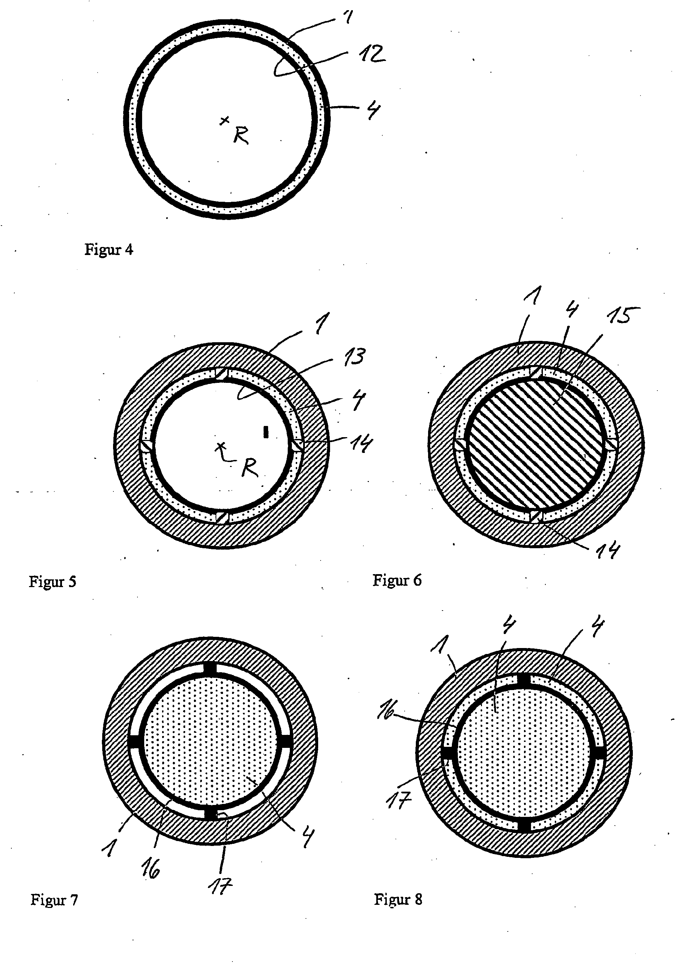

Ein viertes Ausführungsbeispiel einer schwingungsgedämpfen Walze ist in Figur 4 in einem Querschnitt gezeigt. Die Walze umfasst einen doppelwandigen Walzenkörper aus einem dünnen, äußeren Walzenmantel 1 und einem dünnen, inneren Hohlzylinderkörper 12.

Der Walzenmantel 1 und der Zylinderkörper 12 sind über die beiden Zapfenflansche, die den Zapfenflanschen 2 der anderen Ausführungsbeispiele entsprechen, fest miteinander verbunden. Über die axiale Länge können der Walzenmantel 1 und der Zylinderkörper 12 in weiteren Verbindungsstellen miteinander verbunden sein, unumgänglich erforderlich ist dies jedoch nicht.

Der Ringspalt ist vollständig mit der Mischung 4 gefüllt. Der Walzenmantel 1 und der Zylinderkörper 12 bilden somit unmittelbar und in Verbindung mit den beiden Zapfenflanschen die Behälterwände des mit der Mischung gefüllten Hohlraums.

Figur 5 zeigt in einem fünften Ausführungsbeispiel eine Verdrängerwalze in einem Querschnitt. Die Walze weist einen Walzenmantel 1 und einen als Verdränger gebildeten Zylinderkörper 13 auf, der innerhalb des Walzenmantels 1 angeordnet und mittels elastischen Abstützkörpern 14 an dem Walzenmantel 1 elastisch abgestützt und befestigt ist. Der Walzenmantel 1 kann wie im ersten, zweiten und dritten Ausführungsbeispiel mit peripheren Temperierkanälen gebildet sein. Der zwischen dem Walzenmantel 1 und dem Zylinderkörper 13 von dem Ringspalt gebildete Hohlraum ist wie im vierten Ausführungsbeispiel vollständig mit der Mischung 4 gefüllt.

Figur 6 zeigt eine Walze eines sechsen Ausführungsbeispiels, das sich von dem fünften Ausführungsbeispiel nur dadurch unterscheidet, dass der Zylinderkörper 15 kein Hohlzylinder, sondern ein Massivzylinder ist.

Figur 7 zeigt eine Walze eines siebten Ausführungsbeispiels mit einem Walzenmantel 1 und einem in dem Walzenmantel 1 angeordneten Hohlzylinderkörper 16. Der Zylinderkörper 16 ist mit der Mischung 4 gefüllt, d.h., er bildet deren umfangsseitige Behälterwand. Der Ringspalt zwischen dem Walzenmantel 1 und dem Zylinderkörper 16 bleibt frei und kann beispielsweise von einem Temperierfluid durchströmt werden, wie dies von Verdrängerwalzen her bekannt ist. Der Zylinderkörper 16 ist mittels starren Abstandshaltern 17 im Walzeninneren zentrisch angeordnet und an dem Walzenmantel 1 starr befestigt, vorzugsweise ist er eingeschrumpft.

Figur 8 schließlich zeigt einen Querschnitt einer Walze eines achten Ausführungsbeispiels, die sich von der Walze des siebten Ausführungsbeispiels nur dadurch unterscheidet, dass sowohl der Zylinderkörper 16 als auch der zwischen dem Walzenmantel 1 und dem Zylinderkörper 16 verbleibende Ringspalt je vollständig mit der Mischung 4 gefüllt sind. Anstatt in die beiden Hohlräume, nämlich das Innere des Zylinderkörpers 16 und den Ringspalt, je die gleiche Mischung 4 zu füllen, können die beiden Hohlräume auch ganz oder teilweise mit Mischungen gefüllt sein, die sich voneinander unterscheiden, der Art nach aber je der Mischung 4 entsprechen.

In den mit der Mischung 4 gefüllten Hohlräumen sämtlicher Ausführungsbeispiele kann eine oder können mehrere Ausgleichskammern vorgesehen sein, beispielsweise wenigstens eine Kammer 5 und/oder wenigstens eine Kammer 7.

## Patentansprüche

1. Bahnbehandlungswalze mit wenigstens einem Hohlraum (3),
**dadurch gekennzeichnet, dass**
a) der Hohlraum (3) wenigstens teilweise mit einer Mischung (4) aus einer Flüssigkeit und wenigstens einem in der Flüssigkeit nicht löslichen Mischungspartner gefüllt ist, der durch Feststoffpartikel, nämlich einen körnigen Feststoff, gebildet ist
b) und die Mischung (4) eine breiige Konsistenz aufweist.

2. Bahnbehandlungswalze nach, dem vorhergehenden Anspruch, **dadurch gekennzeichnet, dass** die Mischung (4) unter einem Überdruck steht.

3. Bahnbehandlungswalze nach Anspruch 1, **dadurch gekennzeichnet, dass** die Mischung (4) unter einem Unterdruck steht.

4. Bahnbehandlungswalze nach einem der zwei vorhergehenden Ansprüche, **dadurch gekennzeichnet, dass** eine Fluidleitung in den Hohlraum führt und die Mischung (4) über die Fluidleitung mit dem Überdruck oder dem Unterdruck beaufschlagbar ist.

5. Bahnbehandlungswalze nach dem vorhergehenden Anspruch, **dadurch gekennzeichnet, dass** in dem Hohlraum wenigstens eine volumenveränderliche Kammer (5; 7) angeordnet ist.

6. Bahnbehandlungswalze nach dem vorhergehenden Anspruch, **dadurch gekennzeichnet, dass** die Kammer (5; 7) eine flexible Kammerwand (6; 10) aufweist.

7. Bahnbehandlungswalze nach dem vorhergehenden Anspruch, **dadurch gekennzeichnet, dass** die Kammer (5) eine Blase ist.

8. Bahnbehandlungswalze nach einem der Anspruche 5 und 6, **dadurch gekennzeichnet, dass** die Kammer (7) eine bewegliche Kammerwand (9) aufweist.

9. Bahnbehandlungswalze nach dem vorhergehenden Anspruch, **dadurch gekennzeichnet, dass** die Kammerwand (9) von einer weiteren Kammerwand (8) beweglich gelagert, vorzugsweise geführt, wird.

10. Bahnbehandlungswalze nach einem der fünf vorhergehenden Ansprüche, **dadurch gekennzeichnet, dass** die Kammer (7) mit einem elastischen Balg (10) gebildet wird.

11. Bahnbehandlungswalze nach einem der vorhergehenden Ansprüche, **dadurch gekennzeichnet, dass** eine Rotationsachse (R) der Walze (1, 2) sich durch die Mischung (4) in dem zentral gebildeten Hohlraum erstreckt.

12. Bahnbehandlungswalze nach einem der vorhergehenden Ansprüche, **dadurch gekennzeichnet, dass** der Hohlraum bezüglich der Rotationsachse (R) rotationssymmetrisch oder ein Hohlraum einer Mehrzahl von Hohlräumen ist, die zusammen eine rotationssymmetrische Anordnung von Hohlräumen bilden.

13. Bahnbehandlungswalze nach einem der vorhergehenden Ansprüche, **dadurch gekennzeichnet, dass** die Walze (1, 2) einen Walzenmantel (1) aufweist, der für die Mischung (4) eine Behälterwand bildet.

14. Bahnbehandlungswalze nach einem der vorhergehenden Ansprüche, **dadurch gekennzeichnet, dass** die Walze (1, 2) einen Walzenmantel (1) und einen Zylinderkörper (12; 13; 15; 16) umfasst, den der Walzenmantel (1) umgibt, und dass die Mischung (4) zwischen dem Walzenmantel (1) und dem Zylinderkörper (12; 13; 15; 16) angeordnet ist.

15. Bahnbehandlungswalze nach einem der Ansprüche 1 bis 13, **dadurch gekennzeichnet, dass** die Walze (1, 2) einen Walzenmantel (1) und einen von dem Walzenmantel (1) umgebenen Zylinderkörper (16) umfasst und dass die Mischung (4) innerhalb des Zylinderkörpers (16) angeordnet ist.

16. Bahnbehandlungswalze nach einem der zwei vorhergehenden Ansprüche, **dadurch gekennzeichnet, dass** der Zylinderkörper (12; 12; 15; 16) für die Mischung (4) eine Behälterwand bildet.

17. Bahnbehandlungswalze nach einem der vorhergehenden Ansprüche, **dadurch gekennzeichnet, dass** die Walze einen Walzenmantel (1) und einen von dem Walzenmantel (1) umgebenen Zylinderkörper (16) aufweist und dass die Mischung (4) zwischen dem Walzenmantel (1) und dem Zylinderkörper (16) und eine weitere Mischung (4) der beanspruchten Art innerhalb des Zylinderkörpers (16) angeordnet sind.

18. Bahnbehandlungswalze nach einem der vier vorhergehenden Ansprüche, **dadurch gekennzeichnet, dass** die Walze vom Verdrängertyp ist und ein Verdrängerkörper den Zylinderkörper (13; 15; 16) bildet.

19. Bahnbehandlungswalze nach einem der vorhergehenden Ansprüche, **dadurch gekennzeichnet, dass** in der Walze (1, 2) wenigstens ein den Hohlraum bildender Behälter (11) angeordnet ist.

20. Bahnbehandlungswalze nach einem der vorhergehenden Ansprüche, **dadurch gekennzeichnet, dass** sich durch einen Walzenmantel (1) der Walze (1, 2) wenigstens ein Temperierkanal für die Durchleitung eines Heiz- oder Kühlfluids erstreckt, der an wenigstens einem axialen Ende des Walzenkörpers (1), vorzugsweise an beiden axialen Enden, mündet.

## Claims

1. A web-processing roller, comprising at least one hollow space (3),
**characterised in that**
a) the hollow space (3) is at least partially filled with a mixture (4) consisting of a liquid and at least one insoluble co-ingredient in the liquid, formed by solid particles, namely a granular solid,
b) and the mixture (4) exhibits a pulpy consistency.

2. The web-processing roller according to the preceding claim, **characterised in that** the mixture (4) is under a pressure burden.

3. The web-processing roller according to claim 1, **characterised in that** the mixture (4) is under a partial vacuum.

4. The web-processing roller according to any one of the preceding two claims, **characterised in that** a fluid conduit leads into the hollow space and the mixture (4) can be charged with the pressure burden or the partial vacuum via the fluid conduit.

5. The web-processing roller according to the preceding claim, **characterised in that** at least one chamber (5; 7) which is variable in its volume is arranged in the hollow space.

6. The web-processing roller according to the preceding claim, **characterised in that** the chamber (5; 7) comprises a flexible chamber wall (6; 10).

7. The web-processing roller according to the preceding claim, **characterised in that** the chamber (5) is a bubble.

8. The web-processing roller according to any one of claims 5 and 6, **characterised in that** the chamber (7) comprises a moving chamber wall (9).

9. The web-processing roller according to the preceding claim, **characterised in that** the chamber wall (9) is mounted, preferably guided, such that it can move, by another chamber wall (8).

10. The web-processing roller according to any one of the preceding five claims, **characterised in that** the chamber (7) is formed by elastic bellows (10).

11. The web-processing roller according to any one of the preceding claims, **characterised in that** a rotational axis (R) of the roller (1,2) extends through the mixture (4) in the centrally formed hollow space.

12. The web-processing roller according to any one of the preceding claims, **characterised in that** the hollow space is rotationally symmetrical with respect to the rotational axis (R) or is one hollow space of a number of hollow spaces which together form a rotationally symmetrical arrangement of hollow spaces.

13. The web-processing roller according to any one of the preceding claims, **characterised in that** the roller (1, 2) comprises a roller shell (1) which forms a container wall for the mixture (4).

14. The web-processing roller according to any one of the preceding claims, **characterised in that** the roller (1, 2) includes a roller shell (1) and a cylindrical body (12; 13; 15; 16) surrounded by the roller shell (1), and **in that** the mixture (4) is arranged between the roller shell (1) and the cylindrical body (12; 13; 15; 16).

15. The web-processing roller according to any one of claims 1 to 13, **characterised in that** the roller (1, 2) includes a roller shell (1) and a cylindrical body (16) surrounded by the roller shell (1), and **in that** the mixture (4) is arranged within the cylindrical body (16).

16. The web-processing roller according to any one of the preceding two claims, **characterised in that** the cylindrical body (12; 13; 15; 16) forms a container wall for the mixture (4).

17. The web-processing roller according to any one of the preceding claims, **characterised in that** the roller comprises a roller shell (1) and a cylindrical body (16) surrounded by the roller shell (1), and **in that** the mixture (4) is arranged between the roller shell (1) and the cylindrical body (16) and another mixture (4) of the claimed type is arranged within the cylindrical body (16).

18. The web-processing roller according to any one of the preceding four claims, **characterised in that** the roller is a displacement-type roller and a displacement body forms the cylindrical body (13; 15; 16).

19. The web-processing roller according to any one of the preceding claims, **characterised in that** at least one container (11) forming the hollow space is arranged in the roller (1, 2).

20. The web-processing roller according to any one of the preceding claims, **characterised in that** at least one thermal treatment channel for conducting a heating or cooling fluid extends through a roller body (1) of the roller (1, 2) and ports at at least one axial end of the roller body (1), preferably at both axial ends.

## Revendications

1. Cylindre de traitement de bandes avec au moins un espace creux (3),
**caractérisé en ce que**
a) l'espace creux (3) est rempli au moins partiellement d'un mélange (4) constitué d'un liquide et d'au moins un composant du mélange non soluble dans le liquide, lequel est formé par des particules de matière solide, à savoir une matière solide granuleuse,
b) et le mélange (4) présente une consistance pâteuse.

2. Cylindre de traitement de bandes selon la revendication précédente, **caractérisé en ce que** le mélange (4) est soumis à une surpression.

3. Cylindre de traitement de bandes selon la revendication 1, **caractérisé en ce que** le mélange (4) est soumis à une dépression.

4. Cylindre de traitement de bandes selon l'une des deux revendications précédentes, **caractérisé en ce qu'**une conduite de fluide mène dans l'espace creux, et le mélange (4) peut être mis en surpression ou dépression via la conduite de fluide.

5. Cylindre de traitement de bandes selon la revendication précédente, **caractérisé en ce qu'**au moins une chambre (5 ; 7) à volume variable est disposée dans l'espace creux.

6. Cylindre de traitement de bandes selon la revendication précédente, **caractérisé en ce que** la chambre (5 ; 7) comporte une paroi (6 ; 10) flexible.

7. Cylindre de traitement de bandes selon la revendication précédente, **caractérisé en ce que** la chambre (5) est une vessie.

8. Cylindre de traitement de bandes selon l'une des revendications 5 et 6, **caractérisé en ce que** la chambre (7) comporte une paroi de chambre (9) mobile.

9. Cylindre de traitement de bandes selon la revendication précédente, **caractérisé en ce que** la paroi de chambre (9) est supportée de manière mobile, de préférence de manière guidée, par une autre paroi de chambre (8).

10. Cylindre de traitement de bandes selon l'une des cinq revendications précédentes, **caractérisé en ce que** la chambre (7) est formée avec un soufflet (10) élastique.

11. Cylindre de traitement de bandes selon l'une des revendications précédentes, **caractérisé en ce qu'**un axe de rotation (R) du cylindre (1, 2) s'étend à travers le mélange (4) dans l'espace creux formé au centre.

12. Cylindre de traitement de bandes selon l'une des revendications précédentes, **caractérisé en ce que** l'espace creux est à symétrie de révolution par rapport l'axe de rotation (R) ou est un espace creux d'une pluralité d'espaces creux, qui forment conjointement une disposition d'espaces creux à symétrie de révolution.

13. Cylindre de traitement de bandes selon l'une des revendications précédentes, **caractérisé en ce que** le cylindre (1, 2) comporte une enveloppe de cylindre (1), qui forme une paroi de récipient pour le mélange (4).

14. Cylindre de traitement de bandes selon l'une des revendications précédentes, **caractérisé en ce que** le cylindre (1, 2) comprend une enveloppe de cylindre (1) et un corps cylindrique (12 ; 13 ; 15 ; 16), qui est entouré par l'enveloppe de cylindre (1), et **en ce que** le mélange (4) est disposé entre l'enveloppe de cylindre (1) et le corps cylindrique (12 ; 13 ; 15 ; 16).

15. Cylindre de traitement de bandes selon l'une des revendications 1 à 13, **caractérisé en ce que** le cylindre (1, 2) comprend une enveloppe de cylindre (1) et un corps cylindrique (16) entouré par l'enveloppe de cylindre (1), et **en ce que** le mélange (4) est disposé à l'intérieur du corps cylindrique (16).

16. Cylindre de traitement de bandes selon l'une des deux revendications précédentes, **caractérisé en ce que** le corps cylindrique (12 ; 12 ; 15 ; 16) forme une paroi de récipient pour le mélange (4).

17. Cylindre de traitement de bandes selon l'une des revendications précédentes, **caractérisé en ce que** le cylindre comprend une enveloppe de cylindre (1) et un corps cylindrique (16) entouré par l'enveloppe de cylindre (1), et **en ce que** le mélange (4) est disposé entre l'enveloppe de cylindre (1) et le corps cylindrique (16), et un mélange supplémentaire (4) du type revendiqué est disposé à l'intérieur du corps cylindrique (16).

18. Cylindre de traitement de bandes selon l'une des quatre revendications précédentes, **caractérisé en ce que** le cylindre est du type piston et un corps de refoulement forme le corps cylindrique (13 ; 15 ; 16).

19. Cylindre de traitement de bandes selon l'une des revendications précédentes, **caractérisé en ce qu'**au moins un récipient (11) formant l'espace creux est disposé dans le cylindre (1, 2).

20. Cylindre de traitement de bandes selon l'une des revendications précédentes, **caractérisé en ce qu'**au moins un canal de températion pour le passage d'une fluide de chauffage ou de refroidissement s'étend à travers une enveloppe (1) du cylindre (1, 2), lequel débouche sur au moins une extrémité axiale du corps de cylindre (1), de préférence aux deux extrémités axiales.
